(19) Europäisches Patentamt
European Patent Office
Office européen des brevets

(11) Veröffentlichungsnummer: **0 393 421 A2**

(12) **EUROPÄISCHE PATENTANMELDUNG**

(21) Anmeldenummer: **90106456.8**

(51) Int. Cl.5: **C04B 38/00**

(22) Anmeldetag: **04.04.90**

(30) Priorität: **17.04.89 DE 3912552**

(43) Veröffentlichungstag der Anmeldung:
**24.10.90 Patentblatt 90/43**

(84) Benannte Vertragsstaaten:
**CH DE FR GB IT LI NL SE**

(71) Anmelder: **BAYER AG**

**D-5090 Leverkusen 1 Bayerwerk(DE)**

(72) Erfinder: **von Bonin, Wulf, Dr.**
**Droste-Hülshoff-Strasse 9**
**D-5068 Odenthal(DE)**

(54) **Wärmebeständige Schaumstoffe, deren Herstellung und Verwendung.**

(57) Neue wärmebeständige Schaumstoffe sind erhältlich durch Erhitzen von Metallphosphonaten oder Metallphosphonat-Vorläufern auf Temperaturen über 200 °C. Sie können beispielsweise als elektrische und/oder thermische Isoliermaterialien, zur Formteilherstellung, als Hohlraumausfüllung, als Wirkstoffträger und/oder als Füllstoffe mit niedrigen Raumgewichten verwendet werden.

EP 0 393 421 A2

## Wärmebeständige Schaumstoffe, deren Herstellung und Verwendung

Unter wärmebeständigen Schaumstoffen versteht man solche Schaumstoffe, die bei Temperaturen oberhalb 500 °C eingesetzt werden können.

Bekannte wärmebeständige Schaumstoffe weisen ein weitgehend anorganisches Gerüst auf, z.B. auf der Basis von Asbest, Gips oder Silikatgläsern (siehe z.B. DE-OS'en 2 214 609, 2 227 608 und 2 232 136). Solche Schaumstoffe sind spröde und können praktisch nicht mit Raumgewichten von weniger als 200 $kg/m^3$ hergestellt und gehandhabt werden. Ihre Herstellung, insbesondere die Herstellung von Schaumgläsern mit geringem Raumgewicht und feinen Poren ist aufwendig.

Die Herstellung von Schäumen aus Metallphosphaten im technischen Maßstab ist nicht bekannt.

Es wurden nun neue wärmebeständige Schaumstoffe gefunden, die dadurch gekennzeichnet sind, daß sie durch Erhitzen von Metallphosphonaten oder Metallphosphonatvorläufern auf Temperaturen über 200 °C erhältlich sind.

Beispielsweise können Temperaturen über 400 °C, vorzugsweise solche von 500 bis 800 °C und insbesondere solche von 550 bis 750 °C zur Herstellung erfindungsgemäßer wärmebeständiger Schaumstoffe angewendet werden.

Als Metallphosphonate kommen beispielsweise Phosphonate von Metallen der II. und III. Haupt- und Nebengruppen des Periodensystems der Elemente in Frage. Bevorzugt sind Magnesium-, Kalzium- und Aluminiumphosphonate.

Bei den Phosphonatresten kann es sich beispielsweise um solche handeln, die direkt an Phosphoratome gebundene organische Reste enthalten. Als Phosphonatvorläufer kommen z.B. in Frage Phosphonsäurederivate wie Halogenide, Amide, Ester und Nichtmetallsalze in Kombination mit Metallverbindungen, die eine bei höheren Temperaturen abspaltbare anionische Komponente enthalten, beispielsweise Oxide, Hydroxide, Carbonate, Silikate, Borate, Alkylate oder Salze flüchtiger Säuren, wie Carbaminate, Formiate, Acetate, Chloride oder Nitrate. Nichtmetallsalze von Phosphonsäuren sind beispielsweise Ammonium-und Aminsalze. Die genannten Metallverbindungen sind vorzugsweise solche von Metallen der II. und III. Haupt- und Nebengruppen des Periodensystems der Elemente. Bevorzugt sind die Magnesium-, Kalzium- und Aluminiumverbindungen. Die Halogenide, Amide, Ester und/oder Nicht metallsalze von Phosphonsäuren und die Metallverbindungen, die eine bei höherer Temperatur abspaltbare anionische Komponente enthalten, können diese beiden Komponenten in beliebigen Verhältnissen enthalten. Beispielsweise kann das Phosphonsäurederivat in der 0,1-bis 10-fachen molaren Menge vorliegen, die theoretisch für das Entstehen eines der unten spezifizierten Phosphonate der Formeln (I) bis (III) benötigt wird.

Geeignete Metallphosphonate sind beispielsweise solche die den idealisierten Formeln (I) bis (III) entsprechen

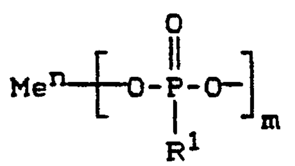

(I)

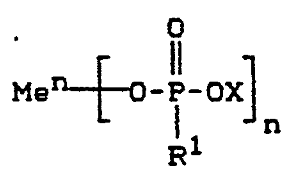

(II)

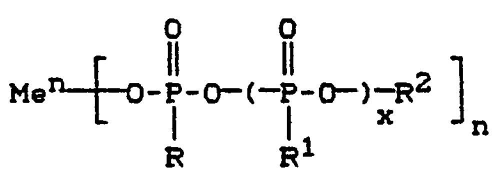

(III)

in denen jeweils
Me für ein Metall,
n für die Wertigkeit des Metalls Me,
m für n/2,
R, $R^1$ und $R^2$ jeweils unabhängig voneinander für einen organischen Rest mit 1 bis 18 C-Atomen,
X für Wasserstoff, Ammonium, Alkylammonium oder ein Äquivalent eines Metalls und
x für Null oder eine ganze Zahl von 1 bis 20,
steht.

Vorzugsweise steht
Me für ein Metall der II. oder III. Haupt- oder Nebengruppe des Periodensystems der Elemente,
R, $R^1$ und $R^2$ jeweils unabhängig voneinander für einen aliphatischen, aromatischen, araliphatischen oder heterocyclischen Rest, insbesondere für einen $C_1$-bis $C_6$-Alkylrest,
X für Wasserstoff, Ammonium oder ein einwertiges Metall und
x für Null oder eine ganze Zahl von 1 bis 6.

Besonders bevorzugt steht
Me für Magnesium, Kalzium oder Aluminium,
R, $R^1$ und $R^2$ jeweils unabhängig voneinander für Methyl, Ethyl, Propyl, Butyl, Cyclohexyl oder Phenyl und ganz besonders bevorzugt für Methyl,
X für Wasserstoff, Ammonium, Natrium oder Kalium und
x für Null.

Die Herstellung von Metallphosphonaten ist prinzipiell bekannt. Beispielsweise kann man dazu freie Phosphonsäuren oder Phosphonsäurechloride mit den entsprechenden Metallhydroxiden umsetzen, wobei in wäßrigem Medium oder wasserfrei gearbeitet werden kann. Von besonderem Interesse ist ein neuartiges Herstellungsverfahren für Metallphosphonate, bei dem ein Metalloxid oder -hydroxid in wäßrigem Medium mit Alkylphosphonsäurealkylestern, z.B. Methylphosphonsäuredimethylester, bei Temperaturen bis zu 200 °C umgesetzt wird. Hierbei können auch Überschüsse über die stöchiometrisch erforderlichen Mengen eingesetzt werden, z.B. bis zu 2 Äquivalente Phosphonsäureester auf 1 Äquivalent Metalloxid oder -hydroxid. Beispielsweise können im Falle des Einsatzes von einem Mol Kalziumoxid 2 bis 3 Mole der Phosphonsäure und/oder ihres Esters eingesetzt werden oder, im bevorzugten Falle des Einsatzes von Aluminiumhydroxid, 2 bis 4, insbesondere 3 Mole der Phosphonsäure und/oder ihres Esters pro Mol Aluminiumhydroxid.

Von besonderem Interesse sind Aluminiumphosphonate, die der folgenden idealisierten Formel (IV) entsprechen

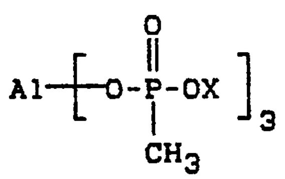

(IV),

in der
X für Wasserstoff, Ammonium, Methyl, Ethyl oder Alkylammonium steht.

Bei Alkylammonium kann es sich z.B. um primäres, sekundäres oder tertiäres Alkylammonium, wie Methylammonium, Dimethylammonium, Ethanolammonium, Triethanolammonium oder um Ammoniumgruppen handeln, die sich von Harnstoff, Melamin, Urazol oder anderen basisch wirkenden Cyanursäureabkömmlingen ableiten.

Man kann geeignete Metallphosphonate auch herstellen, indem man beispielsweise Metallhydroxide, bei denen das Metall die Wertigkeit $n = 2$ oder 3 hat, mit $n - 1$ bis $n + 1$, vorzugsweise n Molen Phosphonsäure oder Phosphonsäureester in wasserfreiem Medium, gegebenenfalls unter Zusatz eines Suspensionsmittels, miteinander bei Temperaturen von 100 bis 300 °C, insbesondere 150 bis 250 °C, umsetzt.

Die Herstellung von Metallphosphonaten kann in Gegenwart von Aminen, z.B. Melamin oder Ammoniak, erfolgen. Es ist nicht erforderlich deren Mengen stöchiometrisch auszurichten, es ist aber im allgemeinen vorteilhaft, die Menge von n Mol nicht zu überschreiten.

Die Metallphosphonate können vor der Verschäumung in Lösung, in (vorzugsweise wäßriger) Suspension, als Pulver, Granulat oder in Gestalt vorgefertigter Formkörper vorliegen.

In die Verschäumung können Metallphosphonate als individuelle Verbindungen oder Vorläufer von

Metallphosphonaten als individuelle 2-Komponenten-Mischung (aus Phosphonsäurederivat und Metallverbindung) eingesetzt werden. Ebenso können beliebige Gemische von Metallphosphonaten und/oder Vorläufern von Metallphosphonaten eingesetzt werden.

Vor oder während des Verschäumungsprozesses können den erfindungsgemäß einzusetzenden Metallphosphonaten und/oder deren Vorläufern Füllstoffe, z.B. in Gestalt von Fasern, Plättchen, Kristallen, Whiskern, Pulvern oder hohlen oder massiven Kügelchen, zugesetzt werden. Diese können z.B. aus Kreiden, Dolomiten, Gesteinsmehlen, Kaolinen, sonstigen Silikaten, Alumosilikaten, Graphiten, Glimmern, Vermikuliten, Perliten, Ruß, Asbest, Kieselsäuren, Quarz, Metall, Gips, Gläsern, Aschen, keramisierenden Zusatzstoffen, Emaillefritten, Glasfritten, Grundmassen für Porzellane, Gläser oder Steinzeuge, Aluminiumoxiden, Boraten, Titandioxid oder Carbiden, Siliciden oder Nitriden mit keramischen Eigenschaften bestehen. Auch Zusätze von organischen Füllstoffen sind möglich. Bevorzugt sind pulverförmige Füllstoffe aus Erdalkalicarbonaten, Eisenoxiden, Gläsern (auch in Form von Kugeln), Wollastonit und anderen Silikaten. Besonders bevorzugt sind Oxide und Hydroxide des Aluminiums.

In einer besonderen Ausführungsform der Erfindung werden blähfähige Zusätze eingesetzt, z.B. blähfähiger Graphit, blähfähige Borate, Silikate und/oder Borsilikate, blähfähige Glimmer, Vermikulite und/oder Perlite. Solche Zusätze können z.B. in Mengen von 5 bis 95 Gew.-%, bezogen auf den gesamten Schaumstoff, vorhanden sein. Blähfähige Graphite sind dabei besonders bevorzugt.

Die Füllstoffe und Zusätze können einzeln oder als beliebige Mischungen untereinander zum Einsatz kommen.

Bei einer anderen bevorzugten Ausführungsform der Erfindung werden die Metallphosphonate und/oder die Vorläufer von Metallphosphonaten und gegebenenfalls Füllstoffe und Zusätze aus Lösung oder Dispersion, gegebenenfalls unter Zuhilfenahme van Bindemitteln, auf Oberflächen aufgebracht und dann in Form einer Beschichtung dem Verschäumungsprozeß unterworfen.

Man kann die Metallphosphonate und/oder deren Vorläufer und gegebenenfalls Füllstoffe und Zusätze auch zu Formkörpern verarbeiten, beispielsweise durch Verpressen, und in dieser Gestalt dann verschäumen. Man kann auch mit Lösungen oder Dispersionen der Metallphosphonate und/oder deren Vorläufer und gegebenenfalls Füllstoffe und Zusätze aufnahmefähige Substrate, z.B. Mineralwollvliese oder Schaumstoffe, imprägnieren und dann die Verschäumung vornehmen, wobei die Matrix gegebenenfalls carbonisieren kann.

Die Verschäumung selbst kann auf verschiedene Weise vorgenommen werden, z.B. in freier Form, indem man Pulver oder Granulate frei, im Wirbelbett oder als lose Schüttung oder freie Beschichtung erhitzt. Man kann die Verschäumung auch in offenen oder geschlossenen Formen vornehmen. In geschlossenen Formen kann die Verschäumung gegebenenfalls unter Verdichtung und/oder unter Ausbildung verfestigter oder haftend aufliegender Deckschichten und glatter Oberflächen erfolgen.

Die erfindungsgemäße Verschäumung erfolgt so, daß man die Metallphosphonate und/oder deren Vorläufer und gegebenenfalls Zusätze und Füllstoffe auf Temperaturen oberhalb 200 °C erhitzt. Die Erhitzung kann in Gegenwart von Luft oder unter Schutzgasen, wie Stickstoff oder Kohlendioxid, erfolgen. Es ist möglich, bei vermindertem, normalem oder erhöhtem Druck zu erhitzen. Die Erhitzung kann z.B. mit einer Flamme, einem Heißgasstrom, mit überhitztem Wasserdampf, durch Wärmeleitung, durch Ultraschall, durch Strahlung oder durch Hochfrequenz- oder Mikrowellenbeheizung erfolgen.

Die bei der freien Verschäumung erzielbaren Raumgewichte der entstehenden Schaumstoffe liegen zumeist unter 100 kg/$m^3$, häufig unter 10 kg/$m^3$. Bei niedrigen Verschäumungstemperaturen oder beim Verschäumen unter Verdichtung können auch höhere Raumgewichte, z.B. solche im Bereich von 100 bis 500 kg/$m^3$ und darüber, erhalten werden. Die Raumgewichte sind im allgemeinen umso niedriger, je schneller die Wärmezufuhr zu den Metallphosphonatpartikeln erfolgt und je näher die Verschäumungstemperatur bei 600-700 °C liegt.

Die gebildeten Schaumstoffe haben im allgemeinen gemischt einen offen- und geschlossenzelligen Charakter, die Zellwände wirken im allgemeinen glasartig. Die erfindungsgemäßen Schaumstoffe sind im allgemeinen spröde, bei Raumgewichten unter 100 kg/$m^3$ haben sie jedoch einen gewissen duktilen bis flexiblen Charakter. Ihre Druckfestigkeiten liegen im allgemeinen im Bereich zwischen 0,01 und 10 MPa, wobei sehr leichte Typen auch noch geringere Werte zeigen können.

Beim Verschäumungsprozeß durchläuft das Metallphosphonat im allgemeinen eine viskose Schmelzphase, wodurch die einzelnen Teilchen miteinander verkleben und sich ein homogenes Schaumgerüst bildet.

Wasserlösliche Phosphonatformulierungen verlieren im allgemeinen beim Schäumprozeß, insbesondere über 500 °C, ihre Wasserlöslichkeit. Beim Verschäumen treten im allgemeinen Gasabspaltungen auf. Es ist deshalb vorteilhaft, beim Arbeiten in geschlossenen Formen für diese Gase und die durch sie verdrängte Luft Auslaßöffnungen vorzusehen. Beim Verschäumen in geschlossenen Formen können Drucke bis 60 bar

und darüber auftreten. geschlossene Formen sind deshalb entsprechend stabil auszulegen.

Die Haftung der Schaumstoffe an den Formwänden, die z.B. aus Metall oder Keramikmaterialien bestehen können, ist im allgemeinen gut und häufig höher als der innere Zusammenhalt der Schaumstoffe. Falls eine Entformung gewünscht wird, ist es deshalb vorteilhaft mit Trennmitteln zu arbeiten. Geeignete Trennmittel sind z.B. Schichten aus organischen Lacken, Zucker, Polyvinylace tatdispersionen, Polymerfolien, Geweben, Vliesen oder Papier, die dann beim Verschäumen Kohleschichten bilden oder Schichten aus Aluminiumfolie, aus Graphit, Talkum, Aluminiumoxid oder Kieselsäure.

Die erfindungsgemäßen Schäume können z.B. zur Formteilherstellung als elektrische und/oder thermische Isoliermaterialien, als Hohlraumausfüllung, als Wirkstoffträger und/oder als Füll- oder Baustoffe mit niedrigen Raumgewichten, sowie zur Herstellung von Glasbeschichtungen, die bei Beflammung aufschäumen und undurchsichtig werden verwendet werden.

Die Verschäumungsreaktion der Metallphosphonate und/oder ihrer Vorläufer kann auch benutzt werden andere, besonders bei Temperaturen zwischen 300 und 700 °C erweichende Substrate, aufzuschäumen oder zu porosieren. Derartige Substrate, z.B. thermoplastische Polymere oder Kunststoffe wie aromatische Polyester, Polyether, Polysulfide, Polyamide, Polycarbonate, Polyimide, Polysiloxane oder Polyphosphazene, können im Gemisch mit Metallphosphonaten und/oder deren Vorläufern in die Verschäumung eingesetzt werden.

Mit Hilfe der erfindungsgemäßen Schaumstoffe können z.B. Heizrohre isoliert werden, wenn man den Hohlraum zwischen zwei ineinanderliegenden Rohren ausschäumt, indem man in diesen Granulate oder Beschichtung aus Formulierungen der Metallphosphonate und/oder deren Vorläufer einbringt, dann erhitzt und so die Verschäumung bewirkt. Es können auch mit den erfindungsgemäßen Schaumstoffen beschichtete Papiere, Keramik- oder Metall-Flächen oder -Gitter hergestellt und z.B. bei Brandschutztüren, Brandschutzdichtungen, Brandschutzgassperren oder sonstigen Branschutzvorrichtungen verwendet werden. Durch Aufschäumen von Pulvern oder Granulaten der Metallphosphonate in einem Heißgasstrom oder einer Flamme können ultraleichte Isolierfüllstoffe hergestellt werden, die für Isolierschüttungen Verwendung finden können. Durch Aufschäumen zwischen zwei Metall- oder Keramikplatten oder sonstigen Formteilen können Sandwiches, Isolierhalbschalen oder beliebige Formkörper hergestellt werden. Für den Fall, daß die Verschäumung nicht bei ausreichend hohen Temperaturen durchgeführt wird, lassen sich Schaumstoffteile mit erhöhten Raumgewichten herstellen, die z.B. bei neuerlichem Erhitzen oder bei Beflammung zu weiterem Aufschäumen neigen und so einen zusätzlichen Brandschutz, z.B. bei Kabeldurchführungen oder sonstigen Brandwanddurchbrüchen bewirken können.

Kombinationen der Metallphosphonate und/oder deren Vorläufer mit anderen blähfähigen und temperaturbeständigen Komponenten, z.B. Blähgraphite, Perlite, Vermikulite, Borate oder Borosilikate, können zu interessanten, zu Isolationszwecken verwendbaren Schaumstoffen führen. Dabei ist es oftmals von Vorteil, daß die aufschäumenden Metallphosphonate bei Temperaturen, bei denen die Zuschlagskomponenten aufgeschäumt sind, aber keine Haftungseigenschaften untereinander haben, als viskose aufschäumende Schmelze fungieren und so eine Haftung der aufgeschäumten Zuschlagsteilchen untereinander vermitteln können.

Im Falle der besonders interessierenden Kombination mit Blähgraphiten, insbesondere mit $NO_x$ oder $SO_x$ getriebenen Blähgraphiten, werden die so erhältlichen Schaumstoffe überraschenderweise wirksam gegen oxidativen Abbau geschützt. Dies ist von besonderem Vorteil, weil sich so die besonders hohe Temperaturbeständigkeit der oxidationsanfälligen Blähgraphitschaumstoffe mit der Oxidationsstabilität der Metallphosphonatschäume vereinigen läßt. Derartige verschäumbare Kombinationen können zwischen 5 und 95 Gew.-%, vorzugsweise zwischen 15 und 60 Gew.-% der Metallphosphonate und/oder deren Vorläufer enthalten.

Die erfindungsgemäßen Schaumstoffe können auch Anwendung finden beim Motorenbau, Kaminbau, bei Auspufftöpfen, Fassadenplatten, Hohlraumfüllungen, Brandschutzelementen, Dachplatten, Raketenbau, Shuttlebau, Brennkammern, Schmelzöfenkonstruktionen, als Wirkstoffträger, Schallschluckelemente, Energieaufnahmeelemente, Beschichtungen mit Brandschutzcharakter und als Bindemittel für Blähgraphite, Vermikulite und Aluminiumhydroxide für Brandschutzausstattungen und Brandschutzlaminate.

Die Korngröße, in der die Metallphosphonate und/oder deren Vorläufer vor der Verschäumung vorliegen ist für die Verschäumbarkeit keine kritische Größe. Diese Korngröße kann beispielsweise über 2 µm liegen, vorzugsweise liegt sie zwischen 5 und 500 µm.

Die erfindungsgemäßen Schaumstoffe zeichnen sich dadurch aus, daß sie sehr niedrige Raumgewichte aufweisen können und bis etwa 800 °C (gegebenenfalls auch noch bei höheren Temperaturen) formbeständig sind. Ihre Herstellung ist einfach, ihre Variationsmöglichkeit hinsichtlich qualitativer und quantitativer Zusammensetzung sehr groß.

Es ist als ausgesprochen überraschend anzusehen, daß erfindungsgemäß auf technisch sehr einfache

Weise mit Phosphonaten sehr hochwertige, wärmebeständige, oxidationsstabile Schaumstoffe erhältlich sind, nachdem dies mit Metallphosphaten nicht gelingt.

## Beispiele

### Herstellung von Phosphonaten

#### Beispiel A:

In 6 Molen Dimethyl-methylphosphonat (DMMP) wurde unter Rühren 1 Mol Kalziumchlorid gelöst. Unter Rühren wurde die Temperatur auf 200 °C gesteigert und 1 Stunde bei dieser Temperatur gehalten. Dabei erfolgte unter Eliminierung von Methylchlorid die Bildung von Kalziumphosphonat, gleichzeitig destillierte überschüssiges DMMP ab. Die Mischung wurde immer noch bei 200 °C gehalten und im Wasserstrahlvakuum von restlichem DMMP befreit. Es wurde ein glasartiges, pulverisierbares, wasserlösliches Material erhalten.

#### Beispiel B:

Es wurde gearbeitet wie bei Beispiel A, jedoch wurde anstelle von Kalziumchlorid Zinkchlorid verwendet. Es wurde ebenfalls ein glasartiges, sprödes Material erhalten.

#### Beispiel C:

1 Mol Magnesiumhydroxid wurde in 20 %-iger wäßriger Suspension mit 2,2 Mol Methylphosphonsäure versetzt und bei 95 °C bis zur Lösung gerührt. Dann wurde im Wasserstrahlvakuum zur Trockene eingedampft. Es wurde ein nicht hygroskopisches Pulver erhalten.

#### Beispiel D:

1 Mol Aluminiumhydroxid (Apyral® B 90 der Bayer AG) wurde in 19 Mol Wasser und 3 Mol Dimethylmethylphosphonat suspendiert und unter Rühren in einem Emailleautoklaven 5 Stunden auf 190 °C erhitzt. Nach dem Abkühlen wurde eine klare, leicht viskose Lösung mit einem gravimetrisch bestimmten Feststoffgehalt von 44 Gew.-% erhalten. Diese Lösung kann als solche weiterverwendet werden, sie kann jedoch auch bei 120 °C zur Trockene eingedampft werden, wobei dann ein bei Raumtemperatur glasartiges, nicht hygroskopisches Material anfällt.

#### Beispiel E:

Es wurde gearbeitet wie in Beispiel D, jedoch 5 Stunden lang auf 150 °C erhitzt. Es wurde eine feinteilige Suspension mit einem gravimetrisch bestimmten Feststoffgehalt von 48 Gew.-% erhalten, die als solche verwendet werden kann. Man kann auch den darin enthaltenen Feststoff durch Abzentrifugieren und Trocknen bei 120 °C als nicht hygroskopisches Pulver gewinnen. Dieses enthält nach spektralen Befunden noch Methylestergruppen.

#### Beispiel F:

Es wurde gearbeitet wie in Beispiel E, jedoch unter zusätzlicher Verwendung von 1 Mol Melamin. Es wurde eine leicht filtrierbare Suspension erhalten. Der Feststoff wurde abfiltriert und bei 120 °C getrocknet. Die abgetrennte Wasserphase enthielt bei Raumtemperatur weniger als 2 Gew.-% Feststoff in gelöster Form.

Beispiel G:

234 Gew.-Teile Aluminiumhydroxid (Typ wie bei Beispiel D) wurden mit 93 Teilen Melamin und 750 Teilen Dimethylmethylphosphonat in einem Schaufeltrockner mit Schlagstangen 3 Stunden auf 160 °C, anschließend 2 Stunden auf 180 °C und daran anschließend 2 Stunden auf 210 °C erhitzt, wobei Dimethylether und etwas Methanol abdestillierten. Nach dem Abkühlen wurde das gebildete Phosphonatsalz als farbloses Pulver erhalten.

Erfindungsgemäße Beispiele

Beispiel 1:

Auf einer Pillenpresse wurden jeweils 0,5 g der gemäß den Beispielen A bis G hergestellten Phosphonate zu Pillen von 3 mm Durchmesser verpreßt. Auf einer Porzellanschale wurden diese Pillen in einen auf 600 °C vorgeheizten Ofen eingebracht. Nach 30 Minuten wurden die Schalen dem Ofen wieder entnommen.

In allen Fällen war ein "blumenkohlartiger", feinporiger Schaumstoffkörper entstanden. Es wurden folgende Raumgewichte ermittelt:

Phosphonat aus Beispiel A: 0,009 g/cm$^3$
Phosphonat aus Beispiel B: 0,015 g/cm$^3$
Phosphonat aus Beispiel C: 0,086 g/cm$^3$
Phosphonat aus Beispiel G: 0,029 g/cm$^3$
Phosphonat aus Beispiel E: 0,003 g/cm$^3$
Phosphonat aus Beispiel F: 0,008 g/cm$^3$

In allen Fällen war das nach dem Aufschäumen gepulverte Material nicht mehr wasserlöslich.

Beispiel 2:

Es wurde wie in Beispiel 1 gearbeitet, jedoch wurden die Pillen in den kalten Ofen gestellt und dieser dann im Verlauf von 1,5 Stunden auf 700 °C aufgeheizt. Bei dieser Temperatur wurde 15 Minuten belassen, dann wurden die Proben entnommen. Auch hier war in allen Fällen ein "blumenkohlartiger", feinporiger Schaumstoffkörper entstanden, dessen Raumgewichte jedoch um etwa 25 % höher lagen als in Beispiel 1.

Beispiel 3:

Aus dem Phosphonat aus Beispiel D wurden Pillen von 0,5 g Gewicht gepreßt. Diese Pillen wurden auf einer Eisenschale in einen jeweils auf verschiedene Temperaturen vorgeheizten Ofen gebracht und 30 Minuten darin belassen. Nach Abkühlen der Proben wurden folgende Raumgewichte ermittelt:

| Temperatur °C | Raumgewicht kg/m$^3$ |
|---|---|
| 300 | kaum Aufschäumen |
| 400 | 680 |
| 500 | 550 |
| 600 | 10 |
| 700 | 5 |
| 800 | 9 |

In allen Fällen oberhalb 500 °C hatten die Schäume feinporigen, homogenen Charakter.

Beispiel 4:

Gleiche Gewichtsteile nicht expandierter Vermikulit und Phosphonat, hergestellte gemäß Beispiele C, wurden gemischt, wobei beide Komponenten Teilchengrößendurchmesser von ca. 2 mm aufwiesen. 20 g dieses Gemisches wurden in eine mit Papier ausgekleidete, aus 2 Stahlhalbschalen bestehende Zylinderform mit 200 ml Volumen gegeben. Die Form wurde in waagerechter Lage in einen auf 600° C aufgeheizten Ofen gebracht und 30 Minuten dort belassen. Dann wurde die Form herausgenommen, abgekühlt und geöffnet. Es wurde ein kompakter, stabiler Schaum mit gutem mechanischem Zusammenhang erhalten, der eine Druckfestigkeit von 0,9 MPa und ein Raumgewicht von 0,09 $g/cm^3$ aufwies.

## Beispiel 5

Unter Zusatz von etwas Wasser, das anschließend wieder abgetrocknet wurde, wurde jeweils granuliert:

a) Blähgraphitpulver (Sigraflex® FR),

b) ein Gemisch aus Blähgraphitpulver und dem Phosphonat aus Beispiel D, das 25 Gew.-% des Phosphonates enthielt,

c) ein Gemisch aus Blähgraphitpulver und dem Phosphonat aus Beispiel D, das 50 Gew.-% des Phosphonates enthielt,

d) ein Gemisch aus Blähgraphitpulver und dem Phosphonat aus Beispiel D, das 75 Gew.-% des Phosphonates enthielt und

e) Phosphonat aus Beispiel D.

Diese fünf Formulierungen wurden jeweils in einer Menge von 20 g in die auch im Beispiel 4 benutzte Zylinderform eingebracht und bei 600° C aufgeschäumt.

In allen Fällen wurden homogen wirkende Schaumstoffzylinder erhalten. Der kein Phosphonat enthaltende Zylinder (aus Granulat a)) war jedoch mechanisch wenig widerstandsfähig und neigte beim Zerschneiden zum Zerbröseln. Die Phosphonat enthaltenden Zylinder (aus den Granulaten b) bis e)) waren mechanisch widerstandsfähiger, weil des Phosphonat als aufschäumendes Bindemittel gewirkt hatte.

Aus allen fünf Zylindern wurde jeweils eine 2 cm dicke Scheibe geschnitten. Diese Scheiben wurden aufrecht auf der Peripherie stehend in einem Muffelofen eingebracht und dort unter Luftzutritt auf 700° C erhitzt. Nach 7 Stunden wurde abgekühlt. Bei der Beurteilung der Scheiben ergab sich folgendes Bild:

a) innen hohl, mechanisch sehr instabil, Zerfall bei Berührung,

b) 0,5 bis 1 mm tief angegriffen, Oberfläche mechanisch leicht beeinträchtigt, verminderte Eindrucksfestigkeit,

c) bis e) innen und außen unverändert und mechanish stabil.

Dies zeigt die durch Metallphosphonate bewirkten guten Bindeeigenschaften und die Stabilisierung gegen Oxidation.

## Beispiel 6:

100 Gew.-Teile der gemäß Beispiel D erhaltenen Phosphonatlösung wurden mit jeweils 50 Teilen verschiedener Füllstoffe mit einem durchschnittlichen Korndurchmesser von 1,2 bis 12 µm bei Raumtemperatur 3 Stunden lang verrührt. Dann wurde die Mischung getrocknet, zerkleinert, zu Pillen von 1 g Gewicht verpreßt und analog Beispiel 1 frei verschäumt. Nach der Verschäumung wurden an den jeweils erhaltenen Schaumstoffen folgende Raumgewichte ermittelt:

| Füllstoff | Raumgewicht g/cm³ |
|---|---|
| Glasmikrokugeln | 0,06 |
| Aluminiumhydroxid | 0,02 |
| Wollastonit | 0,09 |
| Kaolin | 0,22 |
| Colemanit | 0,03 |
| $Fe_2O_3$ | 0,38 |
| Holzmehl | 0,10 |
| Magnesiumhydroxid | 0,02 |
| Aluminiumoxid | 0,39 |
| Titandioxid | 0,40 |
| Nickelpulver | 0,68 |

Beispiel 7:

Die gemäß Beispiel D erhaltene Phosphonatlösung wurde durch Zusatz von gemäß Beispiel E erhaltenem Feststoff zu einer feinteiligen Suspension mit 66 Gew.-% Feststoffgehalt aufkonzentriert und zur Innenbeschichtung eines Eisenrohres mit einem Innendurchmesser von 5 cm verwendet. Nach dem Auftrocknen wurde durch Wägung ermittelt, daß auf 10 cm Länge des Rohres 14 g Phosphonat als Beschichtung aufgebracht worden waren. In das beschichtete Rohr wurde axial ein zweites Eisenrohr mit einem Außendurchmesser von 2,2 cm eingeschoben und in Mittellage justiert. Das so gebildete Doppelwandrohr wurde im Ofen 30 Minuten auf 600° C erhitzt. Nach dem Abkühlen war der Hohlraum zwischen den beiden Rohren mit Phosphonatschaum feinporig ausgeschäumt. Solche Rohre können als Abgasisolierrohre im Motorenbau Verwendung finden.

Beispiel 8:

Gemäß Beispiel F hergestelltes Phosphonat wurde in einer Kugelmühle auf eine Korngröße von ca. 100 µm gemahlen und in einer Stärke von 4 mm zwischen zwei Stahlplatten (Stärke je 0,2 mm) eingebracht. Dieses Päckchen wurde in einen mit einem Schlitz versehenen Graphitblock eingebracht, der eine Ausdehnung des Päckchens auf maximal 2 cm gestattete, und 30 Minuten auf 600° C erhitzt. Nach dem Abkühlen wurde aus dem teilbaren Graphitblock ein mit Phosphonatschaum gefüllter Stahlblechsandwich von 2 cm Höhe entnommen. Die Haftung zwischen Stahlblech und Schaumkern war so gut, daß bei allen Zug- und Scherversuchen die Haftung zwischen Stahl und Schaumstoffkörper nicht gelöst werden konnte, ohne den Schaumkern zu zerstören.

Beispiel 9:

Eine 1 mm starke Stahlplatte wurde mit einer auf 70 % Feststoffgehalt aufkonzentrierten Lösung des Phosphonats aus Beispiel D bestrichen und bei 80° C getrocknet. Es bildete sich ein klarer, nicht kristallisierender, 0,5 mm dicker Lackfilm. Die so vorbereitete Stahlplatte wurde rückseitig mit einem Erdgasbrenner beaufschlagt, so daß in 3 Minuten die Temperatur der Stahlplatte 700° C erreichte. Auf der feuerabgewandten Seite schäumte die Beschichtung zu einem sehr feinporigen isolierenden Schaum auf. Dieser behinderte den Wärmedurchgang so, daß bei einer Schaumdicke von 6 mm die berührungslos gemessene Oberflächentemperatur nach 10 Minuten noch unterhalb 300° C lag.

Beispiel 10:

100 Gew.-Teile der Phosphonatlösung erhalten gemäß Beispiel D, 50 Gew.-Teile des Phosphonats erhalten gemäß Beispiel G und 50 Gew.-Teile Blähgraphit (Sigraflex® FR) wurden zu einer streichfähigen

Paste verrührt. Mit dieser Paste wurde ein 0,3 mm dicker Stahlblechstreifen in einer Breite von 1,5 cm beschichtet. Nach dem Trocknen bei 120 °C betrug die Schichtdicke der Paste 2 mm. Bei Beflammung des so hergestellten Dichtungsstreifens mit einem Erdgasbrenner schäumte die Beschichtung um mehrere 100 Vol.-% auf, ohne daß der expandierende Blähgraphit in der Flamme nennenswert fortgeblasen wurde. Derartige Streifen können zur Abdichtung von Brandschutztüren und Tresoren gegen Feuerangriff verwendet werden.

Beispiel 11:

2 Mol des Ammoniumsalzes der Methylphosphonsäure und 2,5 Mol Kreide wurden als Pulver innig vermischt. Aus dieser Mischung wurden auf einer Pillenpresse Pillen von 0,2 g gepreßt. Diese wurden in einen auf 600 °C vorge heizten Ofen eingebracht und schäumten zu einem feinporigen Phosphonatschaum mit einem Raumgewicht von 0,28 g/cm$^3$ auf.

55 g dieser Pillen wurden gemäß Beispiel 4 zu einem Schaumstoffzylinder verarbeitet, der ein Raumgewicht von 0,27 g/cm$^3$ aufwies.

Beide Schäume können als thermisches Isoliermaterial verwendet werden.

Beispiel 12:

Mit der wäßrigen Lösung des gemäß Beispiel D erhaltenen Phosphonats wurden Vliesstoffe aus Glas, Polyacrylnitrilfasern, Baumwolle und Kaolinfasern, sowie Stahlwolle satt getränkt und abgequetscht. Dann wurde jeweils bei 120 °C getrocknet. Diese Vliesstoffe waren bei dieser Temperatur noch flexibel und konnten gerollt und verformt werden. Die Vliese wurden bei 80 bis 100 °C um ein Rohr gelegt. Nach dem Abkühlen und Entfernen des Innenrohres wurde ein formstabiles Rohrstück aus dem thermoplastischen Kombinationsmaterial erhalten. Diese Rohrstücke schäumten beim Erhitzen auf 700 °C und bei Beflammung jeweils um 100 bis 300 Vol.-% auf. Hierbei wurde ein, selbst bei Verwendung von organischen Fasermaterialien, faserverstärktes Schaumstoffmaterial erhalten. Derartige Rohrhülsen können Verwendung finden als Kabeldurchführung durch Brandwände, wo sie im Brandfall gegen den Durchtritt von Feuer wirksam sind, indem sie unter Ausbildung eines flammbeständigen Schaumes alle Ritzen verschließen.

Jeweils ein 1 cm$^3$-Stück der wie beschrieben ausgerüsteten und getrockneten Vliesstoffe wurden in einem Ofen im Verlauf von 50 Minuten von Raumtemperatur auf 800 °C erhitzt und dann dem Ofen entnommen. In allen Fällen wurde eine Volumenvergrößerung um mehr als 100 % festgestellt.

Vergleichbare Ergebnisse wurden erhalten, als anstelle eines Vlieses ein Polyurethanweichschaum eingesetzt wurde.

Beispiel 13

Eine Fensterglasscheibe wurde mit der Phosphonatlösung D, die zuvor klarfiltriert worden war, beschichtet, so daß ein trockener, glasartiger Film von ca. 0,8 mm Dicke auf der Glasoberfläche entstand. Die so beschichtete Glasplatte wurde in ein doppelwandiges Isolierglaspaket mit Luftspalt innenseitig eingebaut.

Nach 3000 Stunden Belichtung im Weathermometer veränderte der innenliegende Film seine Eigenschaften der Transparenz und Farblosigkeit nicht.

Anschließend wurde das Isolierglas von außen mit einer Brennerflamme beflammt. An der Beflammungsstelle bildete sich ein weißlicher, strahlenreflektierender, feinporiger Schaum, der den Wärmedurchgang und Strahlungsdurchgang erheblich behinderte.

## Ansprüche

1) Wärmebeständige Schaumstoffe, dadurch gekennzeichnet, daß sie durch Erhitzen von Metallphosphonaten oder Metallphosphonat-Vorläufern auf Temperaturen über 200 °C erhältlich sind.

2) Schaumstoffe nach Anspruch 1, dadurch gekennzeichnet, daß es sich bei den Metallphosphonaten um solche von Metallen der II. und/oder III. Haupt-und/oder Nebengruppe des Periodensystems der Elemente handelt.

3) Schaumstoffe nach Anspruch 1, dadurch gekennzeichnet, daß es sich bei den Metallphosphonat-Vorläufern um Kombinationen von Phosphonsäurederivaten mit Metallverbindungen, die eine bei höheren Temperaturen abspaltbare anionische Komponente enthalten, handelt.

4) Schaumstoffe nach Anspruch 1, dadurch gekennzeichnet, daß die Metallphosphonate den idealisierten Formeln (I) bis (III) entsprechen

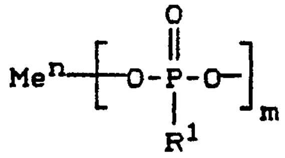

(I)

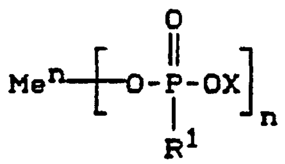

(II)

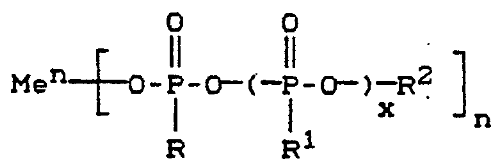

(III)

in denen jeweils
Me für ein Metall,
n für die Wertigkeit des Metalls Me,
m für n/2,
R, $R^1$ und $R^2$ jeweils unabhängig voneinander für einen organischen Rest mit 1 bis 18 C-Atomen,
X für Wasserstoff, Ammonium, Alkylammonium oder ein Äquivalent eines Metalls und
x für Null oder eine ganze Zahl von 1 bis 20,
steht.

5) Schaumstoffe nach Anspruch 4, dadurch gekennzeichnet, daß
Me für Magnesium, Kalzium oder Aluminium,
R, $R^1$ und $R^2$ jeweils unabhängig voneinander für Methyl, Ethyl, Propyl, Butyl, Cyclohexyl oder Phenyl und ganz besonders bevorzugt für Methyl,
X für Wasserstoff, Ammonium, Natrium oder Kalium und
x für Null steht.

6) Schaumstoffe nach Ansprüchen 1 bis 5, dadurch gekennzeichnet, daß Füllstoffe zugesetzt werden.

7) Schaumstoffe nach Ansprüchen 1 bis 6, dadurch gekennzeichnet, daß blähfähige Zusätze eingesetzt werden.

8) Schaumstoffe nach Anspruch 7, dadurch gekennzeichnet, daß sie blähfähige Graphite in Mengen von 5 bis 95 Gew.-%, bezogen auf den gesamten Schaumstoff, enthalten.

9) Verfahren zur Herstellung von wärmebeständigen Schaumstoffen, dadurch gekennzeichnet, daß man Metallphosphonate oder Metallphosphonat-Vorläufer und gegebenenfalls Füllstoffe und Zusätze auf Temperaturen über 200 °C erhitzt.

10) Verwendung von Schaumstoffen nach Ansprüchen 1 bis 9 als elektrische und/oder thermische Isoliermaterialien, als Hohlraumausfüllung, als Wirkstoffträger und/oder als Füllstoff mit niedrigem Raumgewicht.